# EUROPEAN PATENT SPECIFICATION

(11) **EP 4 069 377 B1**
(45) Date of publication and mention of the grant of the patent: **17.06.2026**
(21) Application number: 20839153.2
(22) Date of filing: 04.12.2020
(51) Int. Cl.: A62B 1/20

(54) **EMERGENCY EVACUATION SYSTEM, AN EMERGENCY EVACUATION UNIT AND OPERATION METHOD OF SUCH SYSTEM**
NOTEVAKUIERUNGSSYSTEM, NOTEVAKUIERUNGSEINHEIT UND BETRIEBSVERFAHREN FÜR DIESES SYSTEM
SYSTÈME D'ÉVACUATION D'URGENCE, UNITÉ D'ÉVACUATION D'URGENCE ET PROCÉDÉ DE FONCTIONNEMENT D'UN TEL SYSTÈME

(30) Priority: 06.12.2019 IT 201900023268
(43) Date of publication of application: 12.10.2022
(73) Proprietor: Firebag S.r.l., 00197 Roma (IT)
(72) Inventor: SPASIANO, Matteo, 00197 ROMA (IT)
(74) Representative: Tiburzi, Andrea
(86) International application number: PCT/IT2020/050300
(87) International publication number: WO 2021/111487

(56) References cited:
- WO-A1-2013/034045
- KR-B1- 101 615 728
- US-A- 4 079 812

## Description

The present invention relates to an emergency evacuation system, in particular, an emergency evacuation system from buildings.

The present invention also relates to an emergency evacuation unit and a relative operating method of such a system.

### Field of the invention

More in detail, the invention relates to a system and a unit of the above type, designed and manufactured in particular to allow, in case of situations such as to endanger the safety of persons, a safe evacuation from structures such as buildings and the like.

In the following, the description will be addressed to the emergency evacuation from buildings but it is clear that the same should not be considered limited to this specific use.

### Prior art

Currently, in case of a medium or serious emergency, such as a fire, an earthquake, a terrorist and/or armed attack, a flood, and the like, it can happen that people get stuck inside a building due to psycho-physical impediments, unavailability of escape routes and traditional emergency exits or poor visibility due, for example, to the presence of fumes.

In particular, the aforementioned emergency situations prevent, among other things, the emergency evacuation of persons with disabilities or temporarily incapacitated. Traditional emergency exits, in fact, typically provide emergency stairs positioned inside or outside the building.

Furthermore, these emergency routes and exits can be a source of discomfort for anyone's mobility and require very long travel times with physical effort for the users, who can be subject to panic attacks, therefore increasing the risks for their health.

In fact, for example, in case of an emergency caused by a fire, the emergency stairs can be blocked by objects or flames, preventing the outflow of people to safe places.

A drawback of these known solutions consists in the fact that they cannot be used by anyone, such as, for example, the wounded, the elderly or people with motor and/or sensory disabilities.

Furthermore, a drawback of the systems according to the prior art based on straight slides, such as those described in patent applications n.102017000086175 and n.102017000086155, both in the name of Progetech, is given by the fact that they have as a limit the fact that they are not able to get above the second floor of a building.

A further drawback of these known solutions consists in the fact that they cannot be used in case of buildings subject to historical constraints, or buildings which, due to constraints which they are subject to, are not equipped with escape systems perfectly suited to the outflow capacity.

In light of the above, it is, therefore, necessary to intervene by external rescue entities, such as the Fire-Fighters and the like.

Generally, the intervention of the Fire-Fighters provides for the safety of the subjects present inside the structure through, for example, the use of telescopic ladders to reach the windows of the building.

However, one of the main drawbacks of these known solutions consists in the fact that they require long evacuation times.

Another drawback of these known solutions consists in that they are unable to reach high floors due to physical limits (length, rigidity, etc.) of the tools used.

In fact, the telescopic ladders used by external rescue agencies are not able to exceed a certain height above the ground, allowing the intervention teams to typically reach only the first floors of the building.

A further drawback of these known solutions consists in the fact that they require long intervention times, thus not allowing a quick safety of the subjects present in the building.

Again, a drawback of these known solutions consists in the fact that they are often bulky, unstable, require the presence of several operators and require high maintenance costs.

Among other things, stair systems can be very inclined and therefore not so easy.

The prior art also comprises the patent application US4079812A.

### Scope of the invention

In light of the above, it is therefore an object of the present invention to overcome the limitations of the prior art set out above by providing an emergency evacuation system, which is equipped with a plurality of foldable and tiltable evacuation units.

A further object of the invention is to provide an emergency evacuation system that allows users to descend easily and without danger to the ground.

Another object of the present invention is to provide an emergency evacuation system, which is highly reliable, relatively simple to manufacture, and at competitive costs if compared to the prior art.

Another object of the invention is to provide an emergency evacuation unit, which allows a safe landing of users during the evacuation operations.

### Object of the invention

It is therefore object of the present invention a emergency evacuation system from a building lying on a ground and having one or more windows, comprising: at least two evacuation units, each comprising in turn support platform fixable to the frame of a respective window, a slide, having at least one module inflatable on command, wherein each slide has a first end coupled to the support platform on which it is installed, and a second free end, and wherein each slide is capable of passing from a closed position to a unfolded position; wherein a first of said evacuation units is arranged at a lower height than a second evacuation unit such that, when said slide of said second evacuation unit is in said position unfolded, said second end free of said slide of said second evacuation unit is coupled to said support platform of said first evacuation unit, wherein each evacuation unit comprises at least one hinge, and wherein said support platform is configured to rotate around said at least one hinge by a concave angle.

Always according to the invention, said concave angle may be equal to 270°.

Still according to the invention, each evacuation unit may comprise a first hinge and at least one second hinge, and wherein each evacuation unit is capable of passing from said rest position to said operative position by means of a first rotation of said support platform around said first hinge and a second rotation of said platform around said at least one second hinge, wherein said second rotation is subsequent to said first rotation.

Advantageously according to the invention, when said slide of said first evacuation unit is in said unfolded position, said second free end of said slide of said first evacuation unit may be configured to couple to said support platform of a further evacuation unit placed at a lower height with respect to said first evacuation unit or it couples to with said ground.

Further according to the invention, each evacuation unit may be capable of passing from a rest position, wherein said support platform is arranged inside said building, at an operating position, wherein said support platform is arranged outside of said building and is substantially perpendicular to an external wall of said building, being in correspondence of the respective window.

Always according to the invention, said emergency evacuation system may comprise activating members, arranged in correspondence with said respective windows, for opening said respective windows, may comprise a plurality of detecting and moving units, arranged in correspondence with said windows, for moving said respective evacuation units, and may comprise a logic control unit, connected to said activating members and said detection and moving units, wherein said logic control unit is configured for sending a first control signal to said activating members to open said respective windows, and sending a second control signal to said detecting and moving units to move each evacuation unit from said rest position to said operating position.

Still according to the invention, each detecting and moving unit may be further configured to detect the position of said respective evacuation units and to transmit this position to said logic control unit.

Conveniently according to the invention, said emergency evacuation system may comprise a plurality of light indicators arranged in correspondence of each window, and a plurality of weight sensors arranged on each evacuation unit, wherein each light signal is capable of emitting a plurality of light signals in respective different colors to authorize a user to use said evacuation unit of said respective window, and wherein each weight sensor is capable of detecting the presence of said user on the respective evacuation unit.

It is further object of the present invention an evacuation unit from a building lying on a ground and having one or more windows, comprising a support platform, which can be fixed to the frame of a respective window, a slide having at least one module inflatable on command, wherein each slide has a first end coupled to said support platform on which it is installed, and a second free end, and is capable of moving from a closed position to an unfolded position, wherein said evacuation unit is capable of passing from a rest position, wherein said support platform is arranged inside said building, to an operating position, wherein said platform support is arranged outside of said building and is substantially perpendicular to an external wall of said building, wherein each evacuation unit comprises at least one hinge, and wherein said support platform is configured to rotate around said at least one hinge by a concave angle.

Always according to the invention, said concave angle may be equal to 270°.

Still according to the invention, said evacuation unit may comprise a first hinge and at least one second hinge, wherein said evacuation unit is capable of passing from said rest position to said operative position by means of a first rotation of said support platform around said first hinge and a second rotation of said platform around said at least one second hinge, in which said second rotation is subsequent to said first rotation.

Further according to the invention, said support platform may comprise a first portion, and a second portion movable with respect to said first portion, wherein said support platform is capable of passing from a first position, wherein said second portion is superimposed on said first portion, to a second position, wherein said first portion and said second portion are coplanar.

Still according to the invention, said support platform may further comprise at least two hinges arranged between said first portion and said second portion, and said second portion is rotatably coupled to said first portion by means of said at least two hinges.

Advantageously according to the invention, said second portion may comprise a first slot at a first end of said second portion, a second slot at a second end of said second portion, a first plurality of anchoring elements and a second plurality of anchoring elements to allow the coupling between said second free end of said slide and said support platform, wherein each anchoring element of said first plurality of anchoring elements is arranged inside said first slot, and each anchoring element of said second plurality of anchoring elements is arranged inside said second slot.

Always according to the invention, said second free end of said slide may comprise a first coupling element and a second coupling element, to couple respectively to a first anchoring element, of said first plurality of anchoring elements, and to a second anchoring element of said second plurality of anchoring elements.

Conveniently according to the invention, said coupling elements may be magnetic hooks, and said anchoring elements may be bars made of magnetic material, so that said coupling elements are capable of hooking coupling and magnetically coupling to one of said respective bars made of magnetic material.

Further according to the invention, said evacuation unit may comprise at least one hinge, and said evacuation unit may be capable of passing from said first position to said operating position by a rotation of said support platform about said at least one hinge.

Still according to the invention, said supporting elements may be configured to rotate about said at least one hinge by an angle of 270°.

Always according to the invention, said evacuation unit may comprise at least two supporting elements, each of said at least two supporting elements having a first end attached to said first portion and a second end free, wherein said at least two support elements are capable of passing from a first position, wherein they are integral with said first portion of said support platform, to a second position, wherein said second end contacts said outer wall of said building.

Advantageously according to the invention, said supporting elements may be telescopic bars.

Further according to the invention, said first portion of said support platform may comprise at least one pair of guides, and a seat slidingly movable along said at least one pair of guides, wherein said seat is capable of passing from a rearward position, wherein it is arranged in proximity of said second portion, to an advanced position, wherein it is arranged in proximity of said first end of said slide.

Conveniently according to the invention, said second portion of said support platform may comprise a support base made of magnetic material capable of coupling with said second end of said slide, said second end being realized by means of metal fabric.

Still according to the invention, said evacuation unit may further comprise a safety element arranged, in use, perpendicular to said second portion of said support platform, to prevent said second end of said slide from moving away from said second portion, and a further safety element arranged, in use, transversely with respect to said second portion, to direct and stabilize said second end of said slide in correspondence with said second portion.

It is finally object of the present invention an operating method of an emergency evacuation system from a building arranged on a ground and having one or more windows, at least two evacuation units, activating members, arranged in correspondence with said respective windows, for opening said respective windows, a plurality of detecting and moving units, arranged in correspondence with said windows, for moving said respective evacuation units, each of said evacuation units comprising in turn a support platform, which can be fixed to the frame of a respective window, each of said two or more evacuation units being capable of passing from a rest position to an operating position, and in that it comprises a logic control unit, connected to said activating members and said detecting and moving units, wherein, said method comprises the following steps: A. receiving, from said logic control unit, an alarm signal to signal any emergency situations; B. transmitting, by means of said logic control unit, a first control signal to respective activating members so as to activate the opening of said respective windows; and C. transmitting, by means of said logic control unit, a second control signal to respective detecting and moving units, so as to activate the rotation of said respective evacuation units.

Always according to the invention, said step B may comprise the sub-step of activating, by means of said logic control unit, an evacuation unit of said two or more evacuation units, arranged at a height higher than a further evacuation unit of said two or more evacuation units, only if said further evacuation unit is in said operating position.

Further according to the invention, said step C may comprise the sub-step of moving each of said evacuation units from said rest position, wherein said support platform is arranged inside of said building, to said operating position, wherein said support platform is arranged outside of said building and is substantially perpendicular to an external wall of said building.

Still according to the invention, each of said evacuation units may further comprise a slide having at least one module and inflatable on command, wherein each slide has a first end coupled to said support platform, on which it is installed, and a second free end, each slide being capable of passing from a closed position to an unfolded position, and in that it comprises, after said step C, the step of coupling said second free end of said slide of said evacuation unit, arranged at a height higher than said further evacuation unit, to said support platform of said further evacuation unit, when said slide of said evacuation unit is in said unfolded position.

### Brief description of the figures

The present invention will be now described, for illustrative but not limitative purposes, according to its preferred embodiments, with particular reference to the figures of the enclosed drawings, wherein:
figure 1 shows, in perspective view, an emergency evacuation system applied to a building, according to the present invention;
figure 2 is a perspective view of a detail of the emergency evacuation system of figure 1;
figure 3A shows, in a side view, an embodiment of an evacuation unit in a rest position, according to the present invention;
figure 3B shows, in perspective view, the evacuation unit of figure 3A;
figure 3C shows, in perspective view, a further embodiment of the evacuation unit of figure 3A;
figure 4 shows, in perspective view, the evacuation unit of figure 3A, in a semi-open position;
figure 5 is a perspective view of the evacuation unit of figure 3A, in an operative position;
figure 6 shows, in front view, the evacuation unit of figure 5;
figure 7 shows, in detail and perspective view, coupling between an emergency slide and a support platform of the evacuation unit of figure 3A;
figure 8 shows a further perspective view of the coupling between the emergency slide and the support platform of the evacuation unit, according to figure 7;
figure 9 shows, in perspective view, one end of the emergency slide, according to figures 7 and 8;
figure 10 shows, in perspective view, a further embodiment of the evacuation unit object of the present invention, in an operating position;
figure 11 shows, in front view, the evacuation unit of figure 10;
figure 12 shows, in perspective view, a further embodiment of the evacuation unit object of the present invention, in an operative position; and
figure 13 shows, in front view, an evacuation device for people with motor and/or sensory disabilities, in an operative position.

In the various figures, similar parts will be indicated by the same reference numbers.

### Detailed description

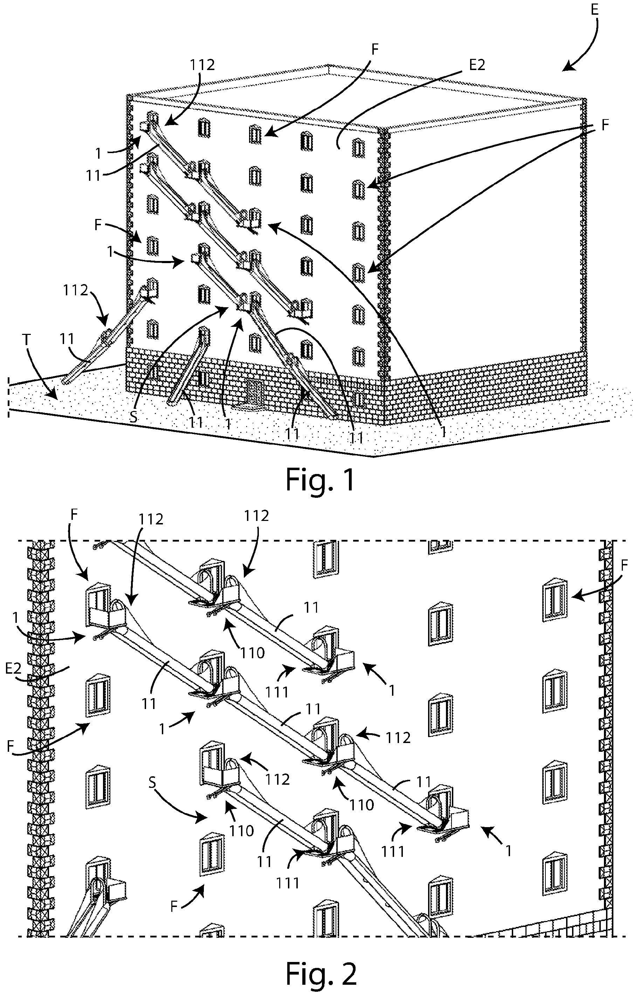

With reference to figures 1-2, the emergency evacuation system S from a building E positioned on a ground T and having a plurality of windows F comprises at least two evacuation units 1 installed in correspondence with respective windows F, from which people can evacuate, at least two detection and movement units 2, each arranged in proximity to a respective evacuation unit 1, and a logic control unit U, in communication with each of said detection and movement unit 2.

In the embodiment described, said emergency evacuation system S comprises at least two evacuation units 1, and two respective detection and handling units 2. However, in further embodiments of the present invention, the number of said evacuation units 1, and therefore the number of said detection and handling units 2, can be greater than two, based on the maximum height of the window F of the building E to be evacuated. By way of example, said emergency evacuation system S can comprise an emergency evacuation unit 1 for each window F of said building E to be evacuated.

Hereinafter reference will be made to a first evacuation unit 1 and a second evacuation unit 1, where said first evacuation unit 1 is arranged at a lower height than said second evacuation unit 1.

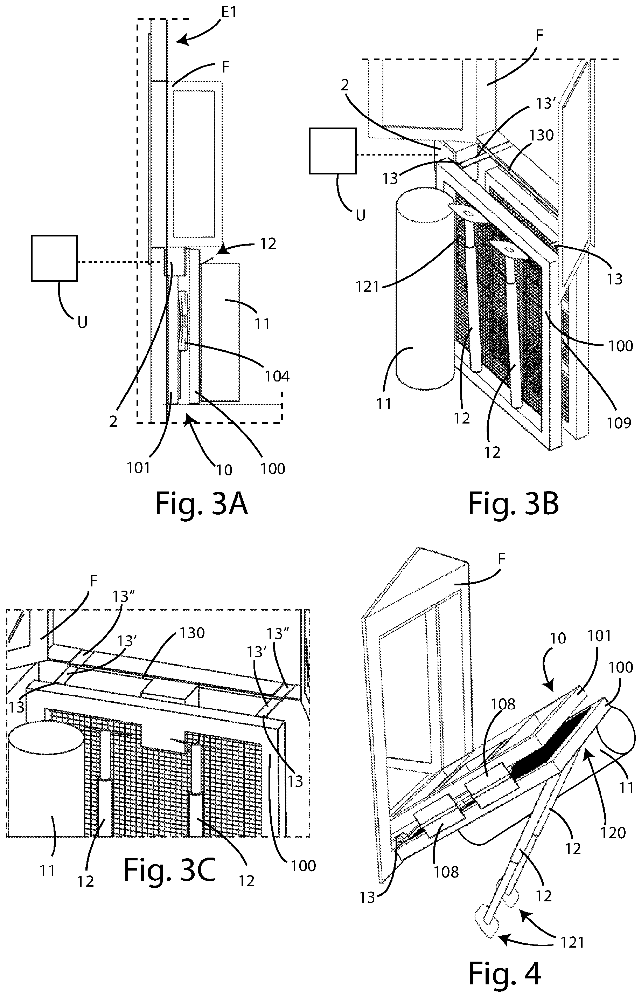

As can be seen in particular from figures 3-6, each evacuation unit 1 comprises a flat support platform 10, which can be fixed to the frame of a respective window F, two anchoring and rotation means 13, an emergency slide 11, two supporting elements 12, a protection barrier 106, and a safety element 109.

Each evacuation unit 1 is capable of passing from a rest position, in which said support platform 10 is arranged inside said building E and is arranged parallel to an internal wall E1 of said building, to an operative position, wherein said support platform 10 is arranged outside said building E and is perpendicular to an external wall E2 of said building E. Therefore, said emergency evacuation system S from building E is a retractable system S.

By way of example, said support platform 10 can be, in use, coplanar with the balustrade of the respective window F, or partially superimposed on the same balustrade.

In particular, when said evacuation unit 1 is in said rest position, said support platform 10 is contained inside a container C. Said container C is able to release from said evacuation unit 1 when it passes by said rest position to said operative position. However, in other embodiments of the present invention, said container C can be made in a different way or absent.

Said support platform 10 comprises, in turn, a first portion 100 and a second portion 101, movable with respect to said first portion 100.

More in detail, as can be seen from figures 4-6, said support platform 10 comprises two hinges 108 arranged between said first portion 100 and said second portion 101, and said second portion 101 is rotatably coupled to said first portion 100 by means of said two hinges 108.

In particular, said support platform 10 is able to pass from a first position, in which said second portion 101 is overlapped on said first portion 100, to a second position, in which said first portion 100 and said second portion 101 are coplanar.

This allows each evacuation unit 1 to minimize the space occupied when said evacuation unit 1 is in rest position, that is when it is not in use, and to maximize the space occupied when said evacuation unit 1 is in operating position, facilitating, in use, the connection between said evacuation units 1 and the following landing of the users on them.

Said first portion 100 is provided with at least one pair of guides 105, and with a seat 104, slidably movable along said at least one pair of guides 105. In this way, as better described below, each user reduces the time spent on each evacuation unit 1, thus speeding up the evacuation operations from the building E.

Said seat 104 is capable of passing from a rest or rearward position, in which it is arranged in the proximity of said second portion 101, to an operative or advanced position, in which it is arranged in the proximity of said slide 11.

Furthermore, said seat 104 allows each user, during the passage from an evacuation unit 1 to a subsequent evacuation unit 1 positioned at a lower height than the previous one, to maintain a seated position, thus avoiding jumps, sudden movements, or possible stresses potentially dangerous for the stability of each evacuation unit 1.

This sitting position, then, together with the other safety elements present in the system S, allows each user to perceive greater safety during the evacuation from building E.

In fact, the presence of said seat 104 allows people not to lean out, therefore, not perceiving dangerous sensations, and to remain in a low position, protected by the safety element 109.

In addition, the presence of said seat 104 allows people with sensory and/or motor disabilities to independently use each evacuation unit 1 of the system S according to the present invention.

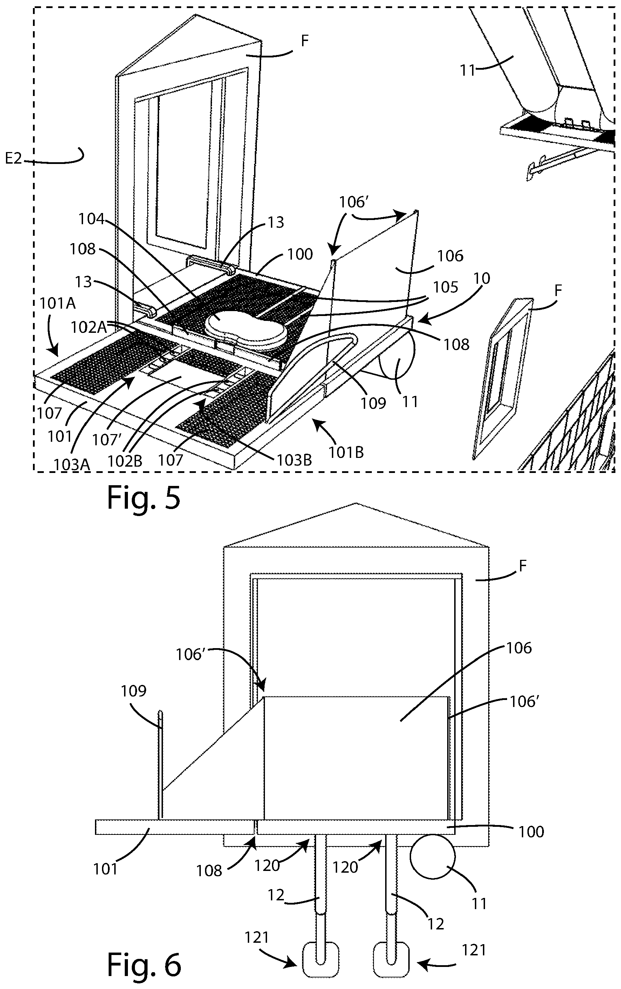

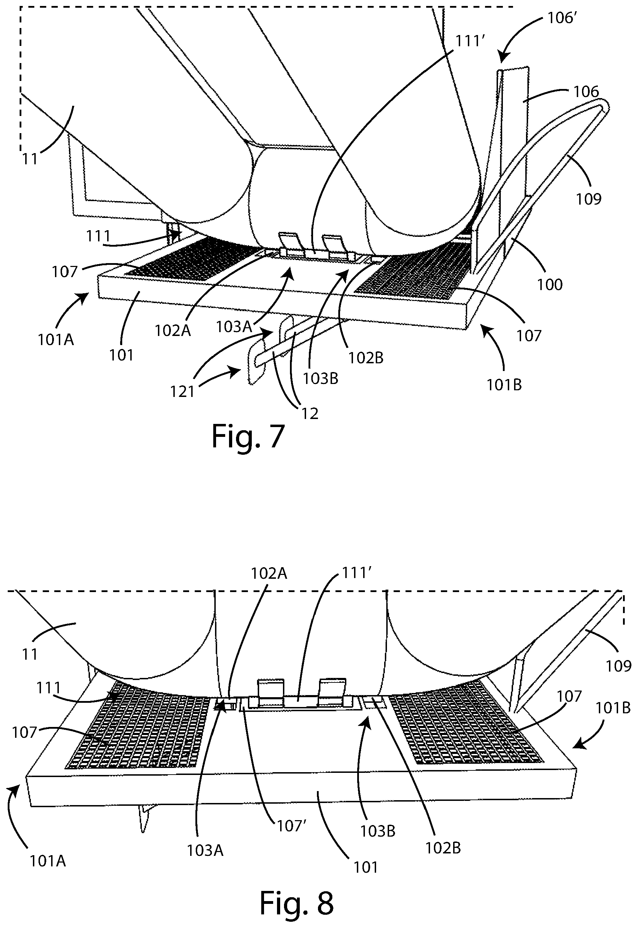

With particular reference to figures 5 and 7, said second portion 101 comprises a first plurality of anchoring elements 102A and a second plurality of anchoring elements 102B to allow, as better described below, the coupling between said second portion 101 of said first evacuation unit 1 and said slide 11 of said second evacuation unit 1 positioned at a higher height than said first evacuation unit 1.

In particular, each anchoring element 102A of said first plurality of anchoring elements 102A is arranged inside a first slot 103A at a first end 101A of said second portion 101.

Similarly, each anchoring element 102B of said second plurality of anchoring elements 102B is arranged inside a second slot 103B at a second end 101B of said second portion 101.

In the embodiment that is described, said anchoring elements 102A, 102B are bars made of magnetic material. However, in other embodiments, said anchoring elements 102A, 102B can have different shapes and can be made of further materials, including non-magnetic ones.

As will be better described hereinafter, said second portion 101 comprises a support base 107 such as, for example, a grid, made of magnetic material to couple to said slide 11 of said second evacuation unit 1.

Each evacuation unit 1 further comprises a first hinge 130 and two second anchoring and rotation means or second hinges 13.

Said first hinge 130 is connected to the internal wall E1 of said building E, in correspondence with the respective window F.

Said two second anchoring and rotation means or second hinges 13 are arranged at a respective end of the window sill F, on which said evacuation unit 1 is installed.

In particular, these two second anchoring and rotation means or second hinges 13 are able to pass from a first position, in which they are arranged inside said building E, to a second position, in which they are hooked to said window F.

Conveniently, said two second anchoring and rotation means 13 are a substantially "L"-shaped so as to hook, in use, on the sill of the respective window F.

In particular, as can be seen from figure 3B, each evacuation unit 1 comprises a respective second hinge 130, connected to said two second anchoring and rotation means 13, to allow each evacuation unit 1 to pass from said rest position to said operating position.

More specifically, each evacuation unit 1 is capable of passing from said rest position to said operating position by means of a first rotation of said platform 10 around the respective first hinge 130, and a second rotation of said platform 10 around said two second anchoring and rotation means or second hinges 13, in which said second rotation is subsequent to said first rotation.

Said two second anchoring and rotation means or second hinges 13 are coupled to the respective platform 10, and to the respective first hinge 130 by means of two arms 13', intended to be housed in corresponding possible housings 13", obtained on the sill of each window F.

In the embodiment described, the first rotation of each platform 10 around the respective hinge 130 is a rotation of an angle equal to approximately 180°, where the latter is defined starting from the platform 10 when it is in said rest position, which is arranged parallel to the inner wall E1 of the building E, as shown in figures 3A-3C.

The second rotation of each platform 10 around the two second anchoring and rotation means or second hinges 13 is, on the other hand, a rotation of an angle equal to about 90°, from the position of the platform 10 following said first rotation, after which each arm 13' abuts against the sill of the respective window F, possibly placing itself in a respective housing 13", in order to reach said operating position.

Therefore, in the present embodiment said rotation of said support platform 10 around said first hinge 130 and said two second anchoring and rotation means or second hinges 13 is a rotation of a concave angle equal to about 270°. However, in further embodiments, such rotation may be other than 270°, for example, less than 270°.

Each evacuation unit 1 is, therefore, completely foldable as well as retractable. In fact, as anticipated, each evacuation unit 1 is able to pass from a rest position, in which it is located inside building E, to an operating position, in which it is located outside the same building E.

As already mentioned, each evacuation unit 1 further comprises an emergency slide 11, capable of being coupled, in use, to the further evacuation unit 1 positioned at a lower height than said evacuation unit 1 or to the ground T, in case of said evacuation unit 1 is the evacuation unit 1 arranged at the minimum height from the same ground T.

Said slide 11 has at least one module and is inflatable on command. Furthermore, each slide 11 is made by means of a fireproof fabric coated with graphite, so as to keep the descent speed of each user constant during the evacuation operations.

In particular, said slide 11 has a first end 110, coupled to said support platform 10 on which it is installed, and a second free end 111.

In fact, each slide 11 is capable of passing from a closed position, in which said slide 11 is folded and arranged below said first portion 100 of said support platform 10, to an unfolded position, in which said second end 111 is coupled to said second portion 101 of said support platform 10 of said second evacuation unit 1 or to the ground T.

In particular, as said, when said slide 11 is in said closed position, said first end 110 is coupled to said first portion 100 of said support platform 10. Therefore, when said slide 11 is in use, that is, it is extended, each user positioned on said seat 104, can use said slide 11 without rising from said seat 104, thus minimizing evacuation times. In fact, when said seat 104 is in an advanced position, it is arranged close to said first end 110 of said slide 11.

In addition, said second free end 111 of said slide 11 comprises a first coupling element 110A and a second coupling element 110B to couple respectively to said first plurality of anchoring elements 102A, and to said second plurality of anchoring elements 102B.

However, in further embodiments of the present invention, said coupling elements 110A, 110B can be in a number greater than two, for example four.

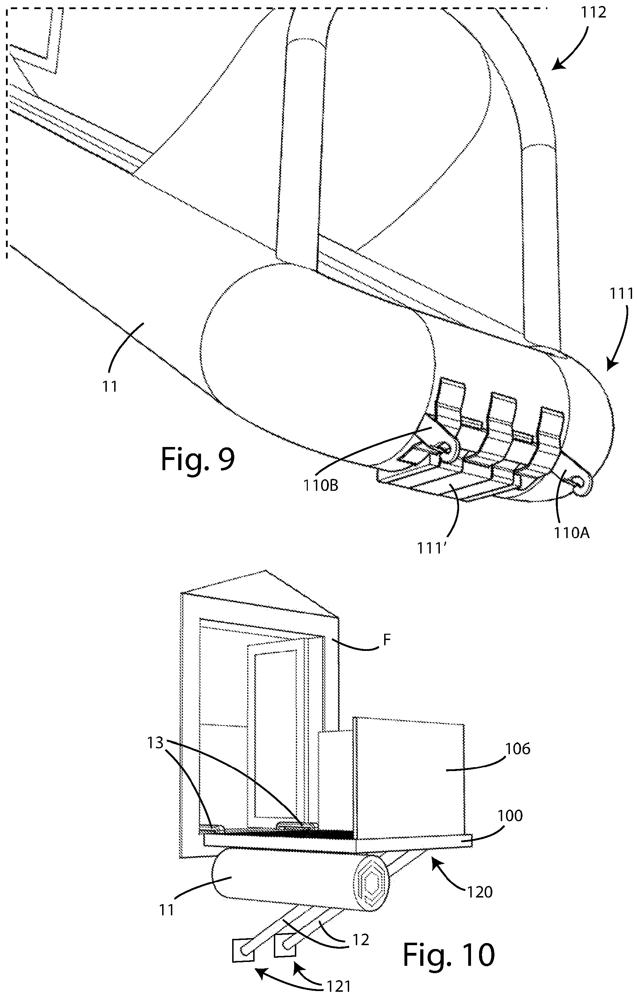

In particular, as can be seen from figure 9, in the present embodiment said coupling elements 110A, 110B are magnetic hooks capable of magnetically hooking and coupling to the respective bars made of magnetic material 102A, 102B.

This allows to realize both a mechanical coupling and a magnetic coupling between said second evacuation unit 1 and said first evacuation unit 1 arranged at a lower height than said evacuation unit 1, or between said second end 111 of said slide 11 of said second evacuation unit 1, and said second portion 101 of said support platform 10 of said first evacuation unit 1. However, in further embodiments of the present invention, said coupling elements 110A, 110B can provide, for example, only a mechanical coupling with the bars 102A, 102B.

Said second free end 111 of said slide 11 is made by means of a metal fabric capable of coupling with said support base 107 made of magnetic material.

In particular, as can be seen in figures 5, 7, and 8, in the embodiment described, said second end 111 comprises an element 111' arranged in the lower part of said end 111, and said second portion 101 comprises a further element 107' arranged between said first slot 103A and said second slot 103B.

However, in further embodiments of the present invention, said elements 111' and 107' can be arranged differently from what is described above and shown, in particular, in figures 5, 7, and 8.

Advantageously, said element 111' and said further element 107' are capable of magnetically coupling together when said second end 111 of said slide 11 is in correspondence with said second portion 101 of said support platform 10.

This allows the slide 11 to be stabilized in the presence of phenomena such as, for example, oscillations due to wind gusts, safely supporting the weight of the people, while sliding between two evacuation units 1.

Therefore, the coupling between said second end 111 and said support base 107, and the coupling between said coupling elements 110A, 110B and said anchoring elements 102A, 102B, constrain, in use, the slide 11 of said second evacuation 1 to said first evacuation unit 1 located at a lower height than said first evacuation unit 1, or to the ground T.

Furthermore, as can be seen from figures 1 and 2, each slide 11 comprises a portion 112 having an arcuate shape arranged in correspondence with said first end 110.

In particular, said portion 112 is also inflatable on command and allows the user to be protected during the evacuation from the building E, in particular during the passage from platform 10 to the slide 11. By way of example, the user can grab said portion 112, so as to support himself before sliding on said slide 11.

Furthermore, each evacuation unit 1 comprises two supporting elements 12 to support said platform 10 and fix, in use, said support platform 10 to said building E. In fact, said supporting elements 12 have a structural function and allow to distribute the weight of the platform 10 when it is in the operative position.

Each of said two supporting elements 12 has a first end 120 fixed to said first portion 100 and a second free end 121.

More specifically, each of said two supporting elements 12 is able to pass from a first position, in which it is integral with said first portion 100 of said support platform 10, to a second position, in which it forms an angle between 0° and 60° with said first portion 100, and in which said second end 121 contacts said outer wall E2 of said building E.

In the embodiment described, said supporting elements 12 are telescopic hydraulic bars. However, in further embodiments these supporting elements 12 can be bars other than hydraulic bars, but with the same function as the latter.

In particular, said first end 120 of each hydraulic bar 12 is connected to a respective hinge (not shown). This allows the rotation of each hydraulic bar 12, with respect to said first portion 100, from said first position to said second position by means of said respective hinge fixed to said first portion 100.

The protection barrier 106 is configured to protect users during evacuation operations from said building E.

With particular reference to figures 5 and 6, said protection barrier 106 is able to pass from a closed position, in which it is arranged parallel to said support platform 10, to an operating position, in which it is extended and arranged perpendicular with respect to said support platform 10.

More specifically, said protection barrier 106 comprises three longitudinally extending elements 106' to maintain, in use, said protection barrier 106 in an extended position.

In one embodiment of the present invention, these elements 106' are integral with said protection barrier 106 and can be actuated by means of a spring drive, when said support platform 10 is in said operating position.

By way of example, said protection barrier 106 can be made of a heat-resistant fabric, such as, for example, a fireproof fabric.

The safety element 109, such as, for example, a tubular element, is arranged, in use, perpendicularly to said second portion 101 of said support platform 10 and is capable of containing the movements of said slide 11, when it is subject to phenomena such as, for example, oscillations due to wind gusts, preventing said second free end 111 of said slide 11 from moving away from said second portion 101 of said support platform 10.

Similarly, to what has been said for the elements 106', in an embodiment of the present invention, also said safety element 109 is integral with said protection barrier 106 and can be operated by means of a spring drive when said support platform 10 is in said operating position.

By way of example, said safety element 109 can be made, for example, of plastic or aluminum.

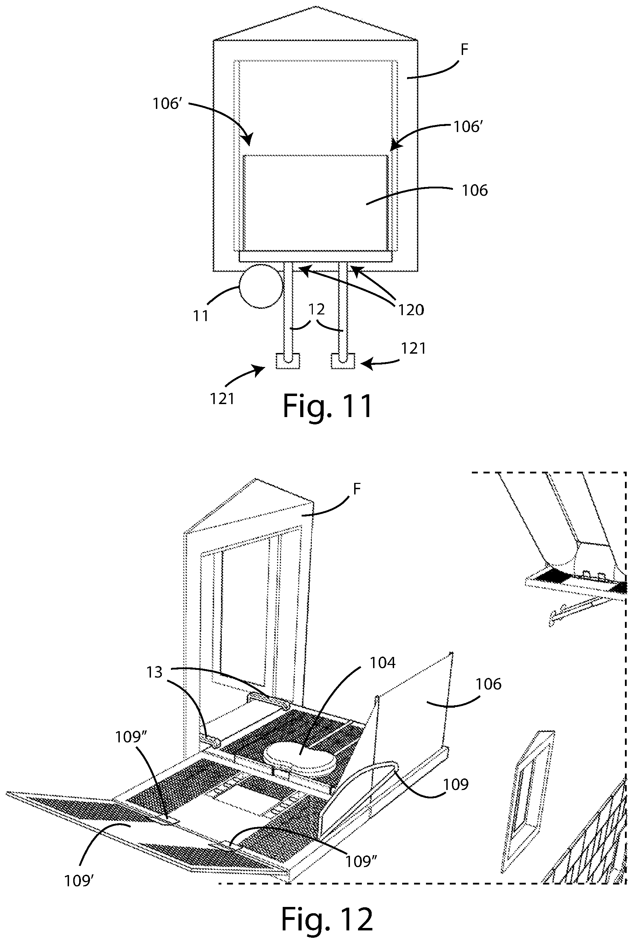

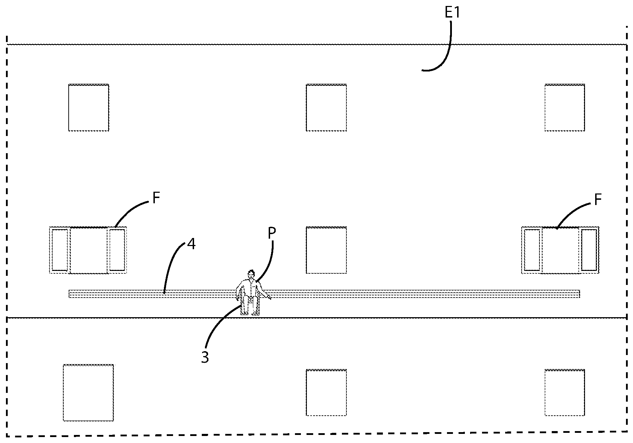

In a further embodiment of the present invention, as can be seen in figure 12, each evacuation unit 1 comprises a further element 109' or third portion 109', which forms, in use, an angle between 0° and 180° with respect to the plane of said second portion 101 of said support platform 10, and at least two hinges 109" between said further safety element 109' and said second portion 101. By way of example, said further safety element 109' can form an angle equal to about 120° with said second portion 101.

More specifically, said further safety element 109' allows to direct and stabilize said slide 11 when it is subject to phenomena such as, for example, oscillations due to wind gusts, favoring a coupling between said second free end 111 of said slide 11, and said second portion 101 of said support platform 10.

In particular, said further safety element 109', coupled to said second portion 101 in rotation by means of said hinges 109", is able to pass from a first position, in which said further safety element 109' is superimposed on said second portion 101, to a second position, in which said further safety element 109' is arranged not coplanar with said second portion 101 of the support platform 10, so as to form an obtuse angle with respect to said second portion 101.

As said, in the embodiment that is described, said emergency evacuation system S further comprises respective detecting and moving units 2 arranged in proximity to said evacuation units 1.

In particular, each detecting and moving units 2 comprises detecting means (not shown), such as, for example, sensors and moving means (not shown), such as, for example, motors powered by buffer batteries.

More specifically, said sensors allow detecting the position of said respective evacuation unit 1, for example, if said evacuation unit 1 is in said rest position or in said operating position.

Furthermore, said movement means allow to move said respective evacuation units 1 or to allow each evacuation unit 1 to pass from said rest position to said operating position.

Moreover, said system S further comprises activating members (not shown) such as, for example, electric actuators, arranged in correspondence with respective windows F, to open/close said respective windows F.

Finally, said system S comprises a logic control unit U connected to each detecting and moving units 2 and to said activating members.

More in detail, said logic control unit U is programmed and configured to open, by means of said activating members, each of said plurality of windows F in case of emergency.

In fact, these windows F can be opened or closed by sending a first command signal by said logic control unit U to said respective activating members. However, each window F can also be manually opened or closed by the user.

Furthermore, said evacuation units 1 can be activated or moved from said rest position to said operating position, by sending a second command signal from said logic control unit U to said respective detecting and moving units 2.

In particular, said logic control unit U is capable of activating said evacuation units 1 starting from said evacuation units 1 of said windows F arranged in the proximity of said ground T. In this way, in fact, the coupling between said first evacuation unit 1 and said second evacuation unit 1 arranged at a higher height than said first evacuation unit 1.

Moreover, said logic control unit U is further configured to receive position data of each evacuation unit 1 from respective sensors included in said detecting and moving units 2. This allows to monitor the status of each evacuation unit 1, and to intervene, for example, in case of their faults.

In an embodiment of the present invention, said system S further comprises a plurality of light indicators (not shown) arranged at each window F, inside said building E, and a plurality of weight sensors (not shown) such as, for example, piezoresistive pressure sensors, arranged on each evacuation unit 1.

More specifically, each light indicator is capable of emitting for example three light signals in three different colors, namely green, orange, and red, and each weight sensor is capable of detecting the presence of a user on the respective evacuation unit 1.

When the light indicator emits a green signal, the user is authorized to use the evacuation unit 1 of the respective window F in correspondence with which this green signal is emitted.

In a nutshell, the user can evacuate building E using such available evacuation unit 1, which is typically the first evacuation unit 1 arranged at a higher height than all the other evacuation units 1 in a system S as described.

On the other hand, when the light indicator emits a red signal, the user is not authorized to use the evacuation unit 1 of the respective window F in correspondence with which this red signal is emitted.

This means that the weight sensor of the previous evacuation unit 1, arranged at a higher height, has detected the presence of another user, who is sliding towards the other evacuation units 1.

Finally, when the light indicator emits an orange signal, the user can use the evacuation unit 1 of the respective window F in correspondence with which this orange signal is emitted, although this evacuation unit 1 is not the one suggested by the system S.

In fact, this occurs when the weight sensor of the previous evacuation unit 1, arranged at a higher height, has not yet detected the presence of another user, or has detected the presence of another user simultaneously with the detection of the weight of the evacuation unit 1 that the user is using. In this latter case, however, the user can safely evacuate the building E since said further user is at a safe distance.

Therefore, the presence of said light indicators and said weight sensors prevents a user from using a first evacuation unit 1, and therefore the slide 11 connected to it, when another user is evacuating through the slide 11 of a second evacuation unit 1 arranged at a higher height than said first evacuation unit 1. This therefore minimizes any accidents or dangerous situations between the users during the evacuation phases from the building E in which said system S is installed.

The operation of the emergency evacuation system S described above is as follows.

In case of it is necessary to proceed with an evacuation from a building E, due to situations such as to endanger the safety of the people inside it, the control logic unit U receives an alarm signal from said detecting and moving units 2 arranged in correspondence with respective windows F. However, in further embodiments of the present invention, this alarm signal can be transmitted by a remote electronic device, which can be activated manually or by a server in connection with each detecting and moving units 2.

Subsequently, as already anticipated, said logic control unit U activates the opening of each window F of said building E on which each evacuation unit 1 is installed, sending a first command signal to the respective activating members.

Then, said logic control unit U activates each evacuation unit 1 by sending a second command signal from said logic control unit U to said respective detecting and moving units 2.

In particular, said logic control unit U activates each evacuation unit 1 starting from said evacuation units 1 of said windows F arranged in the proximity of said ground T until progressively activating the evacuation units 1 of the upper floors, in an appropriate sequence.

More in detail said logic control unit U activates the second evacuation unit 1 installed in a window F of a given floor of the building E only if the first evacuation unit 1 of the lower floor is already in an operative position.

Moreover, when activated, each evacuation unit 1 rotates from the inside of said building E towards the outside of said building E, passing from a rest position to an operating position.

At the end of this rotation, said supporting elements 12 fix and stabilize each evacuation unit 1 to the outer wall E2 of said building E, and said second portion 101 overturns with respect to said first portion 100.

In particular, said second portion 101 passes from a first position, in which it is overlapped on said first portion 100, to a second position, in which said first portion 100 and said second portion 101 are coplanar.

At this point, each slide 11 of the respective evacuation unit 1 begins to inflate and extends towards the ground T.

In an embodiment of the present invention, each evacuation unit 1 comprises an inflating system (not shown) equipped with at least one cylinder under pressure to initiate the deployment of each slide 11. Each slide 11, therefore, inflates and, while unfolds, sucks in the air inside.

At the end of the inflation of each slide 11, the coupling between said second end 111 and said support base 107 and/or the coupling between said coupling elements 110A, 110B and said anchoring elements 102A, 102B, allow to constrain said slide 11 of said second evacuation unit 1 to said first evacuation unit 1 located at a lower height than said second evacuation unit 1, or to the ground T.

At this point, the evacuation units 1 of system S are, therefore, connected to each other and able to ensure the safe evacuation of people from the building E.

Furthermore, as can be seen from figure 13, in a further embodiment of the present invention, said system S further comprises an evacuation device 3 for users P suffering from motor and/or sensory disabilities.

In particular, said evacuation device 3 is slidingly movable along a guide 4 arranged on the internal wall E1 of said building E, below said windows F. The movement of said evacuation device 3 is enabled when each evacuation unit 1 of the respective windows F of the same floor of said building E, is in an operative position, i.e., it is positioned outside of said building E. In this way, in fact, the movement of said evacuation device 3 along said wall E1 is not hindered by the presence of said evacuation units 1 in rest position.

More specifically, said evacuation device 3 is able to pass from a first position, in which it is positioned in correspondence with a respective window F, to a second position, in which it is positioned in correspondence with a further window F of the same plane of said building E. Figure 13 shows the use of the evacuation device 3 for moving between two windows F, however, this evacuation device 3 can be used to move between more than two windows placed on the same floor of said building E.

Therefore, as mentioned, the users P, for example injured, will be able to use said evacuation device 3 and move autonomously from a window F to a further window F, positioned on the same floor of said building E, so as to speed up evacuation operations, minimizing the intervention of rescuers or personnel of rescue bodies.

In one embodiment, said evacuation device 3 can be activated automatically. However, in further embodiments, said evacuation device 3 can also be manually activated by users P.

In the embodiment that is described, as said, each evacuation unit 1, when not in use, is arranged inside said building E, so as to be immediately available in case of emergency.

However, each evacuation unit 1 can also be transportable and can be connected, in case of emergency, to the respective window F, by external rescue bodies such as, for example, the Fire-Fighters.

More specifically, these rescue bodies can hook, for example, said anchoring and rotation means 13 or universal hooks, the evacuation unit 1 or the slide 11 to a respective window F of the building E, or to a raised platform, such as, for example, an elevator, a basket and the like.

### Advantages

An advantage of the emergency evacuation system according to the present invention consists in the fact that it allows the landing or the coupling of at least one emergency slide.

In particular, said emergency evacuation system can also be used in the presence of buildings subject to historical constraints, or buildings which, due to constraints which they are subject to, are not equipped with escape systems perfectly suited to the outflow capacity.

Another advantage of the emergency evacuation system according to the present invention consists in the fact that it allows to reach the elevated floors of buildings and the like, in particular the elevated floors of buildings subjected to historical constraints.

Another advantage of the emergency evacuation system according to the present invention consists in the fact that it allows to obtain reduced evacuation times, in particular decimated with respect to the times, for example, of use of emergency stairs or baskets used by the rescue bodies.

A further advantage of the emergency evacuation system according to the present invention consists in the fact that it can be used by anyone such as, for example, people with motor and/or sensory disabilities, children, elderly, or injured.

Another advantage of the emergency evacuation system according to the present invention consists in the fact that it has a high degree of ease of use, being intuitively simple to use in emergency situations.

A further advantage of the emergency evacuation system according to the present invention consists in the fact that it is endowed with high stability.

Furthermore, an advantage of the emergency evacuation system according to the present invention consists in the fact that it comprises foldable and tiltable evacuation units, thus limiting the bulk in case of non-use of the same.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Retractable emergency evacuation system (S) from a building (E) lying on a ground (T) and having one or more windows (F), comprising:
at least two evacuation units (1), each comprising in turn a support platform (10) fixable to the frame of a respective window (F), a slide (11), having at least one module inflatable on command, wherein each slide (11) has a first end (110) coupled to the support platform (10) on which it is installed, and a second free end (111), and
wherein each slide (11) is capable of passing from a closed position to an unfolded position,
wherein a first of said evacuation units (1) is arranged at a lower height than a second evacuation unit (1) such that, when said slide (11) of said second evacuation unit (1) is in said position unfolded, said second end (111) free of said slide (11) of said second evacuation unit (1) is coupled to said support platform (10) of said first evacuation unit (1), and
wherein each evacuation unit (1) comprises at least one hinge (130, 13),
**characterized**
**in that** said support platform (10) is configured to rotate around said at least one hinge (130, 13) by a concave angle,
**in that** each evacuation unit (1) comprises a first hinge (130) and two second hinges (13),
**in that** said first hinge (130) is connected to an internal wall (E1) of said building (E), in correspondence with said respective window (F),
**in that** said second hinges are arranged at a respective end of a sill of said window (F), on which said evacuation unit (1) is installed,
**in that** each evacuation unit (1) is capable of passing from said rest position to said operative position by means of a first rotation of said support platform (10) around said first hinge (130) and a second rotation of said platform (10) around said two second hinges (13), in which said second rotation is subsequent to said first rotation, and
**in that** said two second hinges (13) are coupled to said respective platform (10), and to said respective first hinge (130) by means of two arms (13').

2. Retractable emergency evacuation system (S) according to the preceding claim, **characterized in that** said concave angle is equal to 270°.

3. Retractable emergency evacuation system (S) according to any one of the preceding claims, **characterized in that** when said slide (11) of said first evacuation unit (1) is in said unfolded position, said second free end (111) of said slide (11) of said first evacuation unit (1) is configured to couple to said support platform (10) of a further evacuation unit (1) placed at a lower height with respect to said first evacuation unit (1) or it couples to with said ground (T).

4. Retractable emergency evacuation system (S) according to any of the preceding claims, **characterized in that** each evacuation unit (1) is capable of passing from a rest position, wherein said support platform (10) is arranged inside said building (E), at an operating position, wherein said support platform (10) is arranged outside of said building (E) and is substantially perpendicular to an external wall (E2) of said building (E), being in correspondence of the respective window (F).

5. Retractable emergency evacuation system (S) according to any one of the preceding claims, **characterized**
**in that** it comprises activating members, arranged in correspondence with said respective windows (F), for opening said respective windows (F),
**in that** it comprises a plurality of detecting and moving units (2), arranged in correspondence with said windows (F), for moving said respective evacuation units (1), and
**in that** it comprises a logic control unit (U), connected to said activating members and said detection and moving units (2),
wherein said logic control unit (U) is configured for sending a first control signal to said activating members to open said respective windows (F), and
sending a second control signal to said detecting and moving units (2) to move each evacuation unit (1) from said rest position to said operating position.

6. Retractable emergency evacuation system (S) according to the preceding claim, **characterized in that** each detecting and moving unit (2) is further configured to detect the position of said respective evacuation units (1) and to transmit this position to said logic control unit (U).

7. Retractable emergency evacuation system (S) according to any one of the claims preceding, **characterized in that** it comprises
a plurality of light indicators arranged in correspondence of each window (F), and a plurality of weight sensors arranged on each evacuation unit (1),
wherein each light signal is capable of emitting a plurality of light signals in respective different colors to authorize a user to use said evacuation unit (1) of said respective window (F), and
wherein each weight sensor is capable of detecting the presence of said user on the respective evacuation unit (1).

8. Evacuation unit (1) from a building (E) lying on a ground (T) and having one or more windows (F), comprising
a support platform (10), which can be fixed to the frame of a respective window (F),
a slide (11) having at least one module inflatable on command, wherein
each slide (11) has a first end (110) coupled to said support platform (10) on which it is installed, and a second free end (111), and
is capable of moving from a closed position to an unfolded position,
wherein said evacuation unit (1) is capable of passing from a rest position, wherein said support platform (10) is arranged inside said building (E), to an operating position, wherein said platform support (10) is arranged outside of said building (E) and is substantially perpendicular to an external wall (E2) of said building (E), and
wherein each evacuation unit (1) comprises at least one hinge (130, 13),
**characterized**
**in that** said support platform (10) is configured to rotate around said at least one hinge (130, 13) by a concave angle,
**in that** each evacuation unit (1) comprises a first hinge (130) and two second hinges (13),
**in that** said first hinge (130) is connected to an internal wall (E1) of said building (E), in correspondence with said respective window (F),
**in that** said second hinges (13) are arranged at a respective end of a sill of said window (F), on which said evacuation unit (1) is installed,
**in that** each evacuation unit (1) is capable of passing from said rest position to said operative position by means of a first rotation of said support platform (10) around said first hinge (130) and a second rotation of said platform (10) around said two second hinges (13), in which said second rotation is subsequent to said first rotation, and
**in that** said two second hinges (13) are couped to said respective platform (10), and to said respective first hinge (130) by means of two arms (13').

9. Evacuation unit (1) according to the preceding claim, **characterized in that** said concave angle is equal to 270°.

10. Evacuation unit (1) according any one of claims 8-9, **characterized in that** said support platform (10) comprises
a first portion (100), and
a second portion (101) movable with respect to said first portion (100),
wherein said support platform (10) is capable of passing from a first position, wherein said second portion (101) is superimposed on said first portion (100), to a second position, wherein said first portion (100) and said second portion (101) are coplanar.

11. Evacuation unit (1) according to the preceding claim, **characterized**
**in that** said support platform (10) further comprises at least two hinges (108) arranged between said first portion (100) and said second portion (101), and
**in that** said second portion (101) is rotatably coupled to said first portion (100) by means of said at least two hinges (108).

12. Evacuation unit (1) according to the preceding claim, **characterized in that** said second portion (101) comprises
a first slot (103A) at a first end (101A) of said second portion (101),
a second slot (103B) at a second end (101B) of said second portion (101),
a first plurality of anchoring elements (102A) and a second plurality of anchoring elements (102 B) to allow the coupling between said second free end (111) of said slide (11) and said support platform (10),
wherein
each anchoring element (102A) of said first plurality of anchoring elements (102A) is arranged inside said first slot (103A), and
each anchoring element (102B) of said second plurality of anchoring elements (102 B) is arranged inside said second slot (103B).

13. Evacuation unit (1) according to the preceding claim, **characterized in that** said second free end (111) of said slide (11) comprises a first coupling element (110A) and a second coupling element (110B), to couple respectively to a first anchoring element (102A), of said first plurality of anchoring elements (102A), and to a second anchoring element (102B) of said second plurality of anchoring elements (102B).

14. Evacuation unit (1) according to the preceding claim, **characterized**
**in that** said coupling elements (110A, 110B) are magnetic hooks, and
**in that** said anchoring elements (102A, 102B) are bars made of magnetic material,
so that said coupling elements (110A, 110B) are capable of hooking coupling and magnetically coupling to one of said respective bars made of magnetic material.

15. Evacuation unit (1) according to any one of claims 10-14,
**characterized in that** it comprises at least two supporting elements (12), each of said at least two supporting elements (12) having a first end (120) attached to said first portion (100) and a second end (121) free,
wherein said at least two support elements (12) are capable of passing from a first position, wherein they are integral with said first portion (100) of said support platform (10), to a second position, wherein said second end (121) contacts said outer wall (E2) of said building (E).

16. Evacuation unit (1) according to the preceding claim, **characterized in that** said supporting elements (12) are telescopic bars.

17. Evacuation unit (1) according to any one of claims 10-16,
**characterized in that** said first portion (100) of said support platform (10) comprises
at least one pair of guides (105), and
a seat (104) slidingly movable along said at least one pair of guides (105),
wherein said seat (104) is capable of passing from a rearward position, wherein it is arranged in proximity of said second portion (101), to an advanced position, wherein it is arranged in proximity of said first end (110) of said slide (11).

18. Evacuation unit (1) according to any one of claims 10-17,
**characterized in that** said second portion (101) of said support platform (10) comprises a support base (107) made of magnetic material capable of coupling with said second end (111) of said slide (11), said second end (111) being realized by means of metal fabric.

19. Evacuation unit (1) according to any one of claims 10-18,
**characterized in that** it further comprises
a safety element (109) arranged, in use, perpendicular to said second portion (101) of said support platform (10), to prevent said second end (111) of said slide (11) from moving away from said second portion (101), and
a further safety element (109') arranged, in use, transversely with respect to said second portion (101), to direct and stabilize said second end (111) of said slide (11) in correspondence with said second portion (101).

20. Operating method of an emergency evacuation system from a building (E) arranged on a ground (T) and having one or more windows (F), at least two evacuation units (1) according to any one of claims 8-19,
activating members, arranged in correspondence with said respective windows (F), for opening said respective windows (F), a plurality of detecting and moving units (2), arranged in correspondence with said windows (F), for moving said respective evacuation units (1),
wherein, said method comprises the following steps:
A. receiving, from said logic control unit (U), an alarm signal to signal any emergency situations;
B. transmitting, by means of said logic control unit (U), a first control signal to respective activating members so as to activate the opening of said respective windows (F); and
C. transmitting, by means of said logic control unit (U), a second control signal to respective detecting and moving units (2), so as to activate the rotation of said respective evacuation units (1).

21. Method according to the previous claim, **characterized in that** said step B comprises the sub-step of activating, by means of said logic control unit (U), an evacuation unit (1) of said two or more evacuation units (1), arranged at a height higher than a further evacuation unit (1) of said two or more evacuation units (1), only if said further evacuation unit (1) is in said operating position.

22. Method according to any one of claims 20-21, **characterized in that** said step C comprises the sub-step of moving each of said evacuation units (1) from said rest position, wherein said support platform (10) is arranged inside of said building (E), to said operating position, wherein said support platform (10) is arranged outside of said building (E) and is substantially perpendicular to an external wall (E2) of said building (E).

23. Method according to any one of claims 20-22, **characterized**
**in that** each of said evacuation units (1) further comprising
a slide (11) having at least one module and inflatable on command,
wherein
each slide (11) has a first end (110) coupled to said support platform (10), on which it is installed, and a second free end (111), each slide (11) being capable of passing from a closed position to an unfolded position, and
**in that** it comprises, after said step C, the step of coupling said second free end (111) of said slide (11) of said evacuation unit (1), arranged at height higher than said further evacuation unit (1), to said support platform (10) of said further evacuation unit (1), when said slide (11) of said evacuation unit (1) is in said unfolded position.

## Patentansprüche

1. Einziehbares Notfall-Evakuierungssystem (S) aus einem Gebäude (E), das auf einem Boden (T) liegt und ein oder mehrere Fenster (F) hat, bestehend aus:
mindestens zwei Evakuierungseinheiten (1), die jeweils wiederum eine Trägerplattform (10) umfassen, die an dem Rahmen eines jeweiligen Fensters (F) befestigt werden kann,
ein Gleis (11), das mindestens ein auf Befehl aufblasbares Modul hat,
wobei jedes Gleis (11) ein erstes Ende (110) hat, das mit der Trägerplattform (10) verbunden ist, auf der es installiert ist, und ein zweites freies Ende (111),
und
wobei jedes Gleis (11) in der Lage ist, von einer geschlossenen Position in eine entfaltete Position überzugehen;
wobei eine erste der genannten Evakuierungseinheiten (1) in einer niedrigeren Höhe als eine zweite Evakuierungseinheit (1) angeordnet ist, so dass, wenn das Gleis (11) der zweiten Evakuierungseinheit (1) in der entfalteten Position ist, das zweite freie Ende (111) des Gleises (11) der zweiten Evakuierungseinheit (1) mit der Trägerplattform (10) der ersten Evakuierungseinheit (1) verbunden ist, und
wobei jede Evakuierungseinheit (1) mindestens ein Scharnier (130, 13) umfasst,
**dadurch gekennzeichnet**,
wobei die Trägerplattform (10) so konfiguriert ist, dass sie sich um das mindestens eine Scharnier (130, 13) um einen konkaven Winkel dreht,
wobei jede Evakuierungseinheit (1) ein erstes Scharnier (130) und zwei zweite Scharniere (13) umfasst,
wobei das erste Scharnier (130) mit einer Innenwand (E1) des Gebäudes (E) verbunden ist, in Übereinstimmung mit dem jeweiligen Fenster (F),
wobei die zweiten Scharniere an einem jeweiligen Ende einer Fensterbank des Fensters (F) angeordnet sind, an dem die Evakuierungseinheit (1) installiert ist,
wobei jede Evakuierungseinheit (1) kann durch eine erste Drehung der Trägerplattform (10) um das erste Gelenk (130) und eine zweite Drehung der Plattform (10) um die beiden zweiten Gelenke (13) von der Ruheposition in die Betriebsposition übergehen, wobei die zweite Drehung nach der ersten Drehung erfolgt, und
wobei die beiden zweiten Scharniere (13) mit der jeweiligen Plattform (10) und dem jeweiligen ersten Scharnier (130) mittels zweier Arme (13') verbunden sind.

2. Einziehbares Notfall-Evakuierungssystem (S) gemäß dem vorhergehenden Anspruch, **gekennzeichnet durch** den konkaven Winkel von 270°.

3. Einziehbares Notfall-Evakuierungssystem (S) gemäß einem der vorhergehenden Ansprüche, **gekennzeichnet dadurch, dass**, wenn das Gleis (11) der ersten Evakuierungseinheit (1) in der entfalteten Position ist, das zweite freie Ende (111) des Gleises (11) der ersten Evakuierungseinheit (1) so konfiguriert ist, dass es mit der Trägerplattform (10) einer weiteren Evakuierungseinheit (1) verbunden wird, die in einer niedrigeren Höhe im Vergleich zur ersten Evakuierungseinheit (1) angeordnet ist, oder es wird mit dem Boden (T) verbunden.

4. Einziehbares Notfall-Evakuierungssystem (S) gemäß einem der vorhergehenden Ansprüche, **gekennzeichnet dadurch, dass** jede Evakuierungseinheit (1) in der Lage ist, von einer Ruheposition, in der die Trägerplattform (10) im Inneren des Gebäudes (E) angeordnet ist, in eine Betriebsposition überzugehen, in der die Trägerplattform (10) außerhalb des Gebäudes (E) angeordnet ist und im Wesentlichen senkrecht zu einer Außenwand (E2) des Gebäudes (E) steht, in Übereinstimmung mit dem jeweiligen Fenster (F).

5. Einziehbares Notfall-Evakuierungssystem (S) gemäß einem der vorhergehenden Ansprüche, **gekennzeichnet**
**dadurch, dass** es Aktivierungselemente umfasst, die in Übereinstimmung mit den jeweiligen Fenstern (F) angeordnet sind, um die jeweiligen Fenster (F) zu öffnen,
dadurch, dass es eine Vielzahl von Erkennungs- und Bewegungseinheiten (2) umfasst, die in Übereinstimmung mit den Fenstern (F) angeordnet sind, um die jeweiligen Evakuierungseinheiten (1) zu bewegen, und
dadurch, dass es eine Logiksteuerungseinheit (U) umfasst, die mit den Aktivierungselementen und den Erkennungs- und Bewegungseinheiten (2) verbunden ist, wobei die Logiksteuerungseinheit (U) konfiguriert ist, um
ein erstes Steuersignal an die Aktivierungselemente zu senden, um die jeweiligen Fenster (F) zu öffnen, und
ein zweites Steuersignal an die Erkennungs- und Bewegungseinheiten (2) zu senden, um jede Evakuierungseinheit (1) von der Ruheposition in die Betriebsposition zu bewegen.

6. Einziehbares Notfall-Evakuierungssystem (S) gemäß dem vorhergehenden Anspruch, **gekennzeichnet dadurch, dass** jede Erkennungs- und Bewegungseinheit (2) zusätzlich konfiguriert ist, um die Position der jeweiligen Evakuierungseinheiten (1) zu erkennen und diese Position an die Logiksteuerungseinheit (U) zu übertragen.

7. Einziehbares Notfall-Evakuierungssystem (S) gemäß einem der vorhergehenden Ansprüche, **gekennzeichnet dadurch, dass** es
eine Vielzahl von Lichtindikatoren umfasst, die in Übereinstimmung mit jedem Fenster (F) angeordnet sind, und eine Vielzahl von Gewichtssensoren, die auf jeder Evakuierungseinheit (1) angeordnet sind,
wobei jedes Lichtsignal in der Lage ist, eine Vielzahl von Lichtsignalen in jeweils unterschiedlichen Farben auszusenden, um einem Benutzer zu erlauben, die Evakuierungseinheit (1) des jeweiligen Fensters (F) zu benutzen, und
wobei jeder Gewichtssensor in der Lage ist, die Anwesenheit des Benutzers auf der jeweiligen Evakuierungseinheit (1) zu erkennen.

8. Evakuierungseinheit (1) aus einem Gebäude (E), das auf einem Boden (T) liegt und ein oder mehrere Fenster (F) hat, bestehend aus
einer Trägerplattform (10), die am Rahmen eines jeweiligen Fensters (F) befestigt werden kann,
einem Gleis (11), das mindestens ein auf Befehl aufblasbares Modul hat,
wobei
jedes Gleis (11) ein erstes Ende (110) hat, das mit der Trägerplattform (10) verbunden ist, auf der es installiert ist, und ein zweites freies Ende (111), und
in der Lage ist, von einer geschlossenen Position in eine entfaltete Position überzugehen,
wobei die Evakuierungseinheit (1) in der Lage ist, von einer Ruheposition, in der die Trägerplattform (10) im Inneren des Gebäudes (E) angeordnet ist, in eine Betriebsposition überzugehen, in der die Trägerplattform (10) außerhalb des Gebäudes (E) angeordnet ist und im Wesentlichen senkrecht zu einer Außenwand (E2) des Gebäudes (E) steht, und
wobei jede Evakuierungseinheit (1) mindestens ein Scharnier (130, 13) umfasst,
**dadurch gekennzeichnet**,
wobei die Trägerplattform (10) so konfiguriert ist, dass sie sich um das mindestens eine Scharnier (130, 13) um einen konkaven Winkel dreht,
wobei jede Evakuierungseinheit (1) ein erstes Scharnier (130) und zwei zweite Scharniere (13) umfasst,
wobei das erste Scharnier (130) mit einer Innenwand (E1) des Gebäudes (E) verbunden ist, in Übereinstimmung mit dem jeweiligen Fenster (F),
wobei die zweiten Scharniere (13) an einem jeweiligen Ende einer Fensterbank des Fensters (F) angeordnet sind, an dem die Evakuierungseinheit (1) installiert ist,
wobei jede Evakuierungseinheit (1) kann durch eine erste Drehung der Trägerplattform (10) um das erste Gelenk (130) und eine zweite Drehung der Plattform (10) um die beiden zweiten Gelenke (13) von der Ruheposition in die Betriebsposition übergehen, wobei die zweite Drehung nach der ersten Drehung erfolgt, und
wobei die beiden zweiten Scharniere (13) mit der jeweiligen Plattform (10) und dem jeweiligen ersten Scharnier (130) mittels zweier Arme (13') verbunden sind.

9. Evakuierungseinheit (1) gemäß dem vorhergehenden Anspruch, **gekennzeichnet dadurch, dass** der konkave Winkel 270° beträgt.

10. Evakuierungseinheit (1) gemäß einem der Ansprüche 8-9, **gekennzeichnet dadurch, dass** die Trägerplattform (10) umfasst
einen ersten Abschnitt (100), und
einen zweiten Abschnitt (101), der sich relativ zu dem ersten Abschnitt (100) bewegen kann,
wobei die Trägerplattform (10) in der Lage ist, von einer ersten Position, in der der zweite Abschnitt (101) auf dem ersten Abschnitt (100) aufliegt, in eine zweite Position überzugehen, in der der erste Abschnitt (100) und der zweite Abschnitt (101) koplanar sind.

11. Evakuierungseinheit (1) gemäß dem vorhergehenden Anspruch, **gekennzeichnet**
**dadurch, dass** die Trägerplattform (10) zusätzlich mindestens zwei Scharniere (108) umfasst, die zwischen dem ersten Abschnitt (100) und dem zweiten Abschnitt (101) angeordnet sind, und
dass der zweite Abschnitt (101) drehbar mit dem ersten Abschnitt (100) mittels der mindestens zwei Scharniere (108) verbunden ist.

12. Evakuierungseinheit (1) gemäß dem vorhergehenden Anspruch, **gekennzeichnet dadurch, dass** der zweite Abschnitt (101) umfasst
einen ersten Schlitz (103A) an einem ersten Ende (101A) des zweiten Abschnitts (101),
einen zweiten Schlitz (103B) an einem zweiten Ende (101B) des zweiten Abschnitts (101),
eine erste Vielzahl von Verankerungselementen (102A) und eine zweite Vielzahl von Verankerungselementen (102 B), um die Verbindung zwischen dem zweiten freien Ende (111) des Gleises (11) und der Trägerplattform (10) zu ermöglichen,
wobei
jedes Verankerungselement (102A) der ersten Vielzahl von Verankerungselementen (102A) im Inneren des ersten Schlitzes (103A) angeordnet ist, und
wobei jedes Verankerungselement (102B) der zweiten Vielzahl von Verankerungselementen (102 B) im Inneren des zweiten Schlitzes (103B) angeordnet ist.

13. Evakuierungseinheit (1) gemäß dem vorhergehenden Anspruch, **gekennzeichnet dadurch, dass** das zweite freie Ende (111) des Gleises (11) ein erstes Koppelelement (110A) und ein zweites Koppelelement (110B) umfasst, um jeweils mit einem ersten Verankerungselement (102A) der ersten Vielzahl von Verankerungselementen (102A) und mit einem zweiten Verankerungselement (102B) der zweiten Vielzahl von Verankerungselementen (102B) zu koppeln.

14. Evakuierungseinheit (1) gemäß dem vorhergehenden Anspruch, gekennzeichnet
wobei die Koppelelemente (110A, 110B) magnetische Haken sind, und
wobei die Verankerungselemente (102A, 102B) aus magnetischem Material bestehen,
so dass die Koppelelemente (110A, 110B) in der Lage sind, sich an einem der jeweiligen Stäbe aus magnetischem Material zu verankern und magnetisch zu koppeln.

15. Evakuierungseinheit (1) gemäß einem der Ansprüche (10-14),
**gekennzeichnet dadurch, dass** sie mindestens zwei Stützelemente (12) umfasst, wobei jedes der mindestens zwei Stützelemente (12) ein erstes Ende (120) hat, das mit dem ersten Abschnitt (100) verbunden ist, und ein zweites Ende (121), das frei ist,
wobei die mindestens zwei Stützelemente (12) in der Lage sind, von einer ersten Position, in der sie mit dem ersten Abschnitt (100) der Trägerplattform (10) verbunden sind, in eine zweite Position überzugehen, in der das zweite Ende (121) die Außenwand (E2) des Gebäudes (E) berührt.

16. Evakuierungseinheit (1) gemäß dem vorhergehenden Anspruch, **gekennzeichnet dadurch, dass** die Stützelemente (12) teleskopische Stangen sind.

17. Evakuierungseinheit (1) gemäß einem der Ansprüche 10-16,
**gekennzeichnet dadurch, dass** der erste Abschnitt (100) der Trägerplattform (10) umfasst
mindestens ein Paar Führungen (105), und
einen Sitz (104), der gleitend entlang des mindestens einen Paars von Führungen (105) bewegbar ist,
wobei der Sitz (104) in der Lage ist, von einer rückwärtigen Position, in der er in der Nähe des zweiten Abschnitts (101) angeordnet ist, in eine vordere Position überzugehen, in der er in der Nähe des ersten Endes (110) des Gleises (11) angeordnet ist.

18. Evakuierungseinheit (1) gemäß einem der Ansprüche 10-17,
**gekennzeichnet dadurch, dass** der zweite Abschnitt (101) der Trägerplattform (10) eine Stützfläche (107) aus magnetischem Material umfasst, die in der Lage ist, sich mit dem zweiten Ende (111) des Gleises (11) zu verbinden, wobei das zweite Ende (111) mittels Metallgewebe realisiert ist.

19. Evakuierungseinheit (1) gemäß einem der Ansprüche 10-18,
**gekennzeichnet dadurch, dass** sie zusätzlich umfasst
ein Sicherheitselement (109), das in Gebrauch senkrecht zu dem zweiten Abschnitt (101) der Trägerplattform (10) angeordnet ist, um zu verhindern, dass das zweite Ende (111) des Gleises (11) sich von dem zweiten Abschnitt (101) entfernt, und
ein weiteres Sicherheitselement (109'), das in Gebrauch quer zu dem zweiten Abschnitt (101) angeordnet ist, um das zweite Ende (111) des Gleises (11) in Übereinstimmung mit dem zweiten Abschnitt (101) zu leiten und zu stabilisieren.

20. Betriebsverfahren eines Notfall-Evakuierungssystems aus einem Gebäude (E), das auf einem Boden (T) angeordnet ist und ein oder mehrere Fenster (F) hat, mindestens zwei Evakuierungseinheiten (1) gemäß einem der Ansprüche 8-19,
Aktivierungselemente, die in Übereinstimmung mit den jeweiligen Fenstern (F) angeordnet sind, um die jeweiligen Fenster (F) zu öffnen, eine Vielzahl von Erkennungs- und Bewegungseinheiten (2), die in Übereinstimmung mit den Fenstern (F) angeordnet sind, um die jeweiligen Evakuierungseinheiten (1) zu bewegen,
wobei das Verfahren die folgenden Schritte umfasst:
A. Empfang eines Alarmsignals von der Logiksteuerungseinheit (U), um auf Notfallsituationen hinzuweisen;
B. Übertragung eines ersten Steuersignals an die jeweiligen Aktivierungselemente mittels der Logiksteuerungseinheit (U), um das Öffnen der jeweiligen Fenster (F) zu aktivieren; und
C. Übertragung eines zweiten Steuersignals an die jeweiligen Erkennungs- und Bewegungseinheiten (2) mittels der Logiksteuerungseinheit (U), um die Drehung der jeweiligen Evakuierungseinheiten (1) zu aktivieren.

21. Verfahren gemäß dem vorhergehenden Anspruch, **gekennzeichnet dadurch, dass** der Schritt B den Unter-Schritt umfasst, dass mittels der Logiksteuerungseinheit (U) eine Evakuierungseinheit (1) der zwei oder mehr Evakuierungseinheiten (1), die in einer Höhe höher als eine weitere Evakuierungseinheit (1) der zwei oder mehr Evakuierungseinheiten (1) angeordnet ist, nur aktiviert wird, wenn die weitere Evakuierungseinheit (1) in der Betriebsposition ist.

22. Verfahren nach einem der Ansprüche 20-21, **dadurch gekennzeichnet, dass** Schritt C den Teilschritt des Bewegens jeder der Evakuierungseinheiten (1) von der Ruheposition, in der sich die Trägerplattform (10) innerhalb des Gebäudes (E) befindet, in die Betriebsposition umfasst, in der sich die Trägerplattform (10) außerhalb des Gebäudes (E) befindet und im Wesentlichen senkrecht dazu steht an eine Außenwand (E2) des genannten Gebäudes (E).

23. Verfahren nach einem der Ansprüche 20 bis 22, **dadurch gekennzeichnet, dass** jede der Evakuierungseinheiten (1) ferner Folgendes umfasst
eine Schiene (11) mit mindestens einem Modul, die sich auf Befehl aufblasen lässt,
wobei
jede Schiene (11) hat ein erstes Ende (110), das mit der genannten Trägerplattform (10) gekoppelt ist, auf der sie installiert ist, und ein zweites freies Ende (111), wobei jede Schiene (11) in der Lage ist, von einer geschlossenen Position in eine ausgeklappte Position überzugehen, und
in dem es nach dem genannten Schritt C den Schritt umfasst, das zweite freie Ende (111) des Schiebers (11) der Evakuierungseinheit (1), das sich in einer höheren Höhe als die weitere Evakuierungseinheit (1) befindet, mit der Unterstützungsplattform (10) der weiteren Evakuierungseinheit (1) zu koppeln, wenn sich der Schieber (11) der Evakuierungseinheit (1) in der ausgeklappten Position befindet.

## Revendications

1. Système d'évacuation d'urgence rétractable (S) d'un bâtiment (E) reposant sur un sol (T) et ayant une ou plusieurs fenêtres (F), comprenant:
au moins deux unités d'évacuation (1), chacune comprenant à son tour une plateforme de support (10) fixable au cadre d'une fenêtre respective (F),
un toboggan (11), ayant au moins un module gonflable sur commande,
où chaque toboggan (11) a une première extrémité (110) couplée à la plateforme de support (10) sur laquelle il est installé, et une seconde extrémité libre (111),
et
où chaque toboggan (11) est capable de passer d'une position fermée à une position dépliée;
où une première de ces unités d'évacuation (1) est disposée à une hauteur inférieure à une seconde unité d'évacuation (1) de sorte que, lorsque le toboggan (11) de la seconde unité d'évacuation (1) est dans cette position dépliée, la seconde extrémité (111) libre de ce toboggan (11) de la seconde unité d'évacuation (1) est couplée à la plateforme de support (10) de la première unité d'évacuation (1), et
où chaque unité d'évacuation (1) comprend au moins une charnière (130, 13),
caractérisé
en ce sens que la plateforme de support (10) est configurée pour pivoter autour de ladite au moins une charnière (130, 13) par un angle concave,
en ce sens que chaque unité d'évacuation (1) comprend une première charnière (130) et deux secondes charnières (13),
en ce sens que ladite première charnière (130) est connectée à un mur interne (E1) du bâtiment (E), en correspondance avec ladite fenêtre respective (F),
en ce sens que lesdites secondes charnières sont disposées à une extrémité respective d'un appui de ladite fenêtre (F), sur laquelle l'unité d'évacuation (1) est installée,
en ce sens que chaque unité d'évacuation (1) est capable de passer de ladite position de repos à ladite position opérationnelle par le biais d'une première rotation de ladite plateforme de support (10) autour de ladite première charnière (130) et d'une seconde rotation de ladite plateforme (10) autour des deux secondes charnières (13), dans laquelle ladite seconde rotation est subséquente à ladite première rotation,
et
en ce sens que lesdites deux secondes charnières (13) sont couplées à ladite plateforme respective (10), et à ladite première charnière respective (130) par le biais de deux bras (13').

2. Système d'évacuation d'urgence rétractable (S) selon la revendication précédente, caractérisé en ce sens que l'angle concave est égal à 270°.

3. Système d'évacuation d'urgence rétractable (S) selon l'une des revendications précédentes, caractérisé en ce sens que lorsque le toboggan (11) de la première unité d'évacuation (1) est dans ladite position dépliée, la seconde extrémité libre (111) de ce toboggan (11) de la première unité d'évacuation (1) est configurée pour se coupler à la plateforme de support (10) d'une autre unité d'évacuation (1) placée à une hauteur inférieure par rapport à la première unité d'évacuation (1) ou elle se couple avec le sol (T).

4. Système d'évacuation d'urgence rétractable (S) selon l'une des revendications précédentes, caractérisé en ce sens que chaque unité d'évacuation (1) est capable de passer d'une position de repos, où la plateforme de support (10) est disposée à l'intérieur du bâtiment (E), à une position opérationnelle, où la plateforme de support (10) est disposée à l'extérieur du bâtiment (E) et est sensiblement perpendiculaire à un mur externe (E2) du bâtiment (E), étant en correspondance avec la fenêtre respective (F).

5. Système d'évacuation d'urgence rétractable (S) selon l'une des revendications précédentes,
caractérisé
en ce sens qu'il comprend des membres d'activation, disposés en correspondance avec lesdites fenêtres respectives (F), pour ouvrir lesdites fenêtres respectives (F),
en ce sens qu'il comprend une pluralité d'unités de détection et de déplacement (2), disposées en correspondance avec lesdites fenêtres (F), pour déplacer lesdites unités d'évacuation respectives (1), et
en ce sens qu'il comprend une unité de contrôle logique (U), connectée auxdits membres d'activation et auxdites unités de détection et de déplacement (2),
où ladite unité de contrôle logique (U) est configurée pour
envoyer un premier signal de contrôle auxdits membres d'activation pour ouvrir lesdites fenêtres respectives (F), et
envoyer un second signal de contrôle auxdites unités de détection et de déplacement (2) pour déplacer chaque unité d'évacuation (1) de ladite position de repos à ladite position opérationnelle.

6. Système d'évacuation d'urgence rétractable (S) selon la revendication précédente, caractérisé en ce sens que chaque unité de détection et de déplacement (2) est en outre configurée pour détecter la position desdites unités d'évacuation respectives (1) et transmettre cette position à ladite unité de contrôle logique (U).

7. Système d'évacuation d'urgence rétractable (S) selon l'une des revendications précédentes, caractérisé en ce sens qu'il comprend
une pluralité d'indicateurs lumineux disposés en correspondance de chaque fenêtre (F), et une pluralité de capteurs de poids disposés sur chaque unité d'évacuation (1),
où chaque signal lumineux est capable d'émettre une pluralité de signaux lumineux dans des couleurs différentes respectives pour autoriser un utilisateur à utiliser ladite unité d'évacuation (1) de ladite fenêtre respective (F), et
où chaque capteur de poids est capable de détecter la présence dudit utilisateur sur la respective unité d'évacuation (1).

8. Unité d'évacuation (1) d'un bâtiment (E) reposant sur un sol (T) et ayant une ou plusieurs fenêtres (F), comprenant
une plateforme de support (10), qui peut être fixée au cadre d'une fenêtre respective (F),
un toboggan (11) ayant au moins un module gonflable sur commande,
dans lequel
chaque toboggan (11) a une première extrémité (110) couplée à ladite plateforme de support (10) sur laquelle il est installé, et une seconde extrémité libre (111), et
est capable de se déplacer d'une position fermée à une position dépliée,
où ladite unité d'évacuation (1) est capable de passer d'une position de repos, où la plateforme de support (10) est disposée à l'intérieur du bâtiment (E), à une position opérationnelle, où la plateforme de support (10) est disposée à l'extérieur du bâtiment (E) et est sensiblement perpendiculaire à un mur externe (E2) du bâtiment (E), et
où chaque unité d'évacuation (1) comprend au moins une charnière (130, 13),
caractérisé
en ce sens que la plateforme de support (10) est configurée pour pivoter autour de ladite au moins une charnière (130, 13) par un angle concave,
en ce sens que chaque unité d'évacuation (1) comprend une première charnière (130) et deux secondes charnières (13),
en ce sens que ladite première charnière (130) est connectée à un mur interne (E1) du bâtiment (E), en correspondance avec ladite fenêtre respective (F),
en ce sens que lesdites secondes charnières (13) sont disposées à une extrémité respective d'un appui de ladite fenêtre (F), sur laquelle l'unité d'évacuation (1) est installée,
en ce sens que chaque unité d'évacuation (1) est capable de passer de ladite position de repos à ladite position opérationnelle par le biais d'une première rotation de ladite plateforme de support (10) autour de ladite première charnière (130) et d'une seconde rotation de ladite plateforme (10) autour des deux secondes charnières (13), dans laquelle ladite seconde rotation est subséquente à ladite première rotation, et
en ce sens que lesdites deux secondes charnières (13) sont couplées à ladite plateforme respective (10), et à ladite première charnière respective (130) par le biais de deux bras (13').

9. Unité d'évacuation (1) selon la revendication précédente, caractérisée en ce sens que l'angle concave est égal à 270°.

10. Unité d'évacuation (1) selon l'une des revendications 8-9, caractérisée en ce sens que ladite plateforme de support (10) comprend
une première portion (100), et
une seconde portion (101) mobile par rapport à ladite première portion (100),
où ladite plateforme de support (10) est capable de passer d'une première position, où ladite seconde portion (101) est superposée à ladite première portion (100), à une seconde position, où ladite première portion (100) et ladite seconde portion (101) sont coplanaires.

11. Unité d'évacuation (1) selon la revendication précédente, caractérisée
en ce sens que ladite plateforme de support (10) comprend en outre au moins deux charnières (108) disposées entre ladite première portion (100) et ladite seconde portion (101), et
en ce sens que ladite seconde portion (101) est couplée de manière rotative à ladite première portion (100) par le biais desdites au moins deux charnières (108).

12. Unité d'évacuation (1) selon la revendication précédente, caractérisée en ce sens que ladite seconde portion (101) comprend
une première fente (103A) à une première extrémité (101A) de ladite seconde portion (101),
une seconde fente (103B) à une seconde extrémité (101B) de ladite seconde portion (101),
une première pluralité d'éléments d'ancrage (102A) et une seconde pluralité d'éléments d'ancrage (102 B) pour permettre le couplage entre ladite seconde extrémité libre (111) du toboggan (11) et ladite plateforme de support (10),
dans lequel
chaque élément d'ancrage (102A) de ladite première pluralité d'éléments d'ancrage (102A) est disposé à l'intérieur de ladite première fente (103A), et
chaque élément d'ancrage (102B) de ladite seconde pluralité d'éléments d'ancrage (102 B) est disposé à l'intérieur de ladite seconde fente (103B).

13. Unité d'évacuation (1) selon la revendication précédente, caractérisée en ce sens que ladite seconde extrémité libre (111) du toboggan (11) comprend un premier élément de couplage (110A) et un second élément de couplage (110B), pour se coupler respectivement à un premier élément d'ancrage (102A), de ladite première pluralité d'éléments d'ancrage (102A), et à un second élément d'ancrage (102B) de ladite seconde pluralité d'éléments d'ancrage (102B).

14. Unité d'évacuation (1) selon la revendication précédente, caractérisée
en ce sens que lesdits éléments de couplage (110A, 110B) sont des crochets magnétiques, et
en ce sens que lesdits éléments d'ancrage (102A, 102B) sont des barres en matériau magnétique,
de sorte que lesdits éléments de couplage (110A, 110B) sont capables de s'accrocher et de se coupler magnétiquement à l'une desdites barres respectives en matériau magnétique.

15. Unité d'évacuation (1) selon l'une des revendications (10-14),
caractérisée en ce sens qu'elle comprend au moins deux éléments de support (12), chacun desdits au moins deux éléments de support (12) ayant une première extrémité (120) attachée à ladite première portion (100) et une seconde extrémité (121) libre,
où lesdits au moins deux éléments de support (12) sont capables de passer d'une première position, où ils sont intégrés à ladite première portion (100) de ladite plateforme de support (10), à une seconde position, où ladite seconde extrémité (121) touche le mur extérieur (E2) du bâtiment (E).

16. Unité d'évacuation (1) selon la revendication précédente, caractérisée en ce sens que lesdits éléments de support (12) sont des barres télescopiques.

17. Unité d'évacuation (1) selon l'une des revendications 10-16,
caractérisée en ce sens que ladite première portion (100) de ladite plateforme de support (10) comprend
au moins une paire de guides (105), et
un siège (104) mobile glissant le long de ladite au moins une paire de guides (105),
où ledit siège (104) est capable de passer d'une position arrière, où il est disposé à proximité de ladite seconde portion (101), à une position avancée, où il est disposé à proximité de la première extrémité (110) du toboggan (11).

18. Unité d'évacuation (1) selon l'une des revendications 10-17,
caractérisée en ce sens que ladite seconde portion (101) de ladite plateforme de support (10) comprend une base de support (107) en matériau magnétique capable de se coupler avec ladite seconde extrémité (111) du toboggan (11), ladite seconde extrémité (111) étant réalisée par le biais d'un tissu métallique.

19. Unité d'évacuation (1) selon l'une des revendications 10-18,
caractérisée en ce sens qu'elle comprend en outre
un élément de sécurité (109) disposé, en utilisation, perpendiculairement à ladite seconde portion (101) de ladite plateforme de support (10), pour empêcher ladite seconde extrémité (111) du toboggan (11) de s'éloigner de ladite seconde portion (101), et
un autre élément de sécurité (109') disposé, en utilisation, transversalement par rapport à ladite seconde portion (101), pour diriger et stabiliser ladite seconde extrémité (111) du toboggan (11) en correspondance avec ladite seconde portion (101).

20. Méthode d'opération d'un système d'évacuation d'urgence d'un bâtiment (E) disposé sur un sol (T) et ayant une ou plusieurs fenêtres (F), au moins deux unités d'évacuation (1) selon l'une des revendications 8-19,
membres d'activation, disposés en correspondance avec lesdites fenêtres respectives (F), pour ouvrir lesdites fenêtres respectives (F), une pluralité d'unités de détection et de déplacement (2), disposées en correspondance avec lesdites fenêtres (F), pour déplacer lesdites unités d'évacuation respectives (1), dans lequel ledit procédé comprend les étapes suivantes:
A. recevoir, de ladite unité de contrôle logique (U), un signal d'alarme pour signaler toute situation d'urgence;
B. transmettre, par le biais de ladite unité de contrôle logique (U), un premier signal de contrôle aux membres d'activation respectifs afin d'activer l'ouverture desdites fenêtres respectives (F); et
C. transmettre, par le biais de ladite unité de contrôle logique (U), un second signal de contrôle aux unités de détection et de déplacement respectives (2), afin d'activer la rotation desdites unités d'évacuation respectives (1).

21. Méthode selon la revendication précédente, caractérisée en ce sens que ladite étape B comprend la sous-étape d'activer, par le biais de ladite unité de contrôle logique (U), une unité d'évacuation (1) desdites deux ou plusieurs unités d'évacuation (1), disposée à une hauteur supérieure à une autre unité d'évacuation (1) desdites deux ou plusieurs unités d'évacuation (1), uniquement si ladite autre unité d'évacuation (1) est dans ladite position opérationnelle.

22. Méthode selon l'une des revendications 20-21, caractérisée en ce sens que ladite étape C comprend la sous-étape de déplacer chacune desdites unités d'évacuation (1) de ladite position de repos, où la plateforme de support (10) est disposée à l'intérieur du bâtiment (E), à ladite position opérationnelle, où la plateforme de support (10) est disposée à l'extérieur du bâtiment (E) et est sensiblement perpendiculaire à un mur externe (E2) du bâtiment (E).

23. Méthode selon l'une des revendications 20-22, caractérisée en ce sens que chacune desdites unités d'évacuation (1) comprend en outre
un toboggan (11) ayant au moins un module et gonflable sur commande,
dans lequel
chaque toboggan (11) a une première extrémité (110) couplée à ladite plateforme de support (10), sur laquelle il est installé, et une seconde extrémité libre (111), chaque toboggan (11) étant capable de passer d'une position fermée à une position dépliée, et
en ce qu'elle comprend, après ladite étape C, l'étape de couplage de ladite deuxième extrémité libre (111) de ladite glissière (11) de ladite unité d'évacuation (1), disposée à une hauteur supérieure à celle de ladite autre unité d'évacuation (1), à ladite plateforme de support (10) de ladite autre unité d'évacuation (1), lorsque ladite glissière (11) de ladite unité d'évacuation (1) est dans ladite position dépliée.
